Europäisches Patentamt

(19) **European Patent Office** (11) Numéro de publication: **0 018 865**

Office européen des brevets **B1**

(12) **FASCICULE DE BREVET EUROPEEN**

(45) Date de publication du fascicule du brevet: **21.09.83** (51) Int. Cl.³: **H 04 Q 11/04**

(21) Numéro de dépôt: **80400449.7**

(22) Date de dépôt: **03.04.80**

(54) Dispositif concentrateur-déconcentrateur.

(30) Priorité: **25.04.79 FR 7910491**

(43) Date de publication de la demande:
**12.11.80 Bulletin 80/23**

(45) Mention de la délivrance du brevet:
**21.09.83 Bulletin 83/38**

(84) Etats contractants désignés:
**BE DE GB IT SE**

(56) Documents cités:
**FR - A - 2 341 999**
**FR - A - 2 347 846**
**FR - A - 2 370 393**
**US - A - 4 021 618**

**COMMUTATION ET ELECTRONIQUE no. 55
novembre 1976 Paris FR REVEL; "Concentration
des lignes d'abonnés en commutation
électronique temporelle", pages 25—32**

**1978 INTERNATIONAL ZÜRICH SEMINAR ON
DIGITAL COMMUNICATIONS, 7—9 mars 1978
IEEE New York US CHARRANSOL: "Development
of a time division switching network usable in a
very large range of capacities", pages B6.1—B6.6**

(73) Titulaire: **LE MATERIEL TELEPHONIQUE
THOMSON-CSF
146 Boulevard de Valmy
F-92707 Colombes Cedex (FR)**

(72) Inventeur: **Salle, Jacques Edmond
"THOMSON-CSF" - SCPI 173 Boulevard
Haussmann
75360 Paris Cedex 08 (FR)**
Inventeur: **Jossif, Jean Aimé Michel
"THOMSON-CSF" - SCPI 173 Boulevard
Haussmann
75360 Paris Cedex 08 (FR)**
Inventeur: **Rathier, Gilbert Jean Marie
"THOMSON-CSF" - SCPI 173 Boulevard
Haussmann
75360 Paris Cedex 08 (FR)**
Inventeur: **Vales, Jean Pierre
"THOMSON-CSF" - SCPI 173 Boulevard
Haussmann
75360 Paris Cedex 08 (FR)**

(74) Mandataire: **Chaverneff, Vladimir et al,
THOMSON-CSF SCPI 173, Bld Haussmann
F-75379 Paris Cedex 08 (FR)**

Courier Press, Leamington Spa, England.

Dispositif concentrateur-deconcentrateur

La présente invention concerne un dispositif concentrateur-déconcentrateur à base de matrices temporelles symétriques (MTS) pour centraux téléphoniques temporels utilisant la technique de Modulation par Impulsion et Codage (MIC). Selon une technique connue les dispositifs de concentration permettent de raccorder à un central ou autocommutateur téléphonique un nombre d'abonnés plus grand que le nombre total des entrées du réseau de connexion contenu dans le central. On se fonde pour cela sur la constatation que tous les abonnés n'utilisent pas leur ligne en même temps, ce qui permet de ne donner accès simultanément au réseau de connexion qu'à une partie d'entre eux, et donc de diminuer la taille de ce réseau.

On rappelle que la technique MIC consiste à échantillonner les signaux vocaux au rythme de 8 kHz puis à quantifier et à coder ces échantillons sous forme de signaux numériques dans lesquels chaque échantillon est représenté par un mot de huit éléments binaires.

Le multiplexage par répartition temporelle permet de transmettre par l'intermédiaire d'une seule jonction numérique MIC des signaux émanant d'abonnés distincts, un tel multiplexage permettant classiquement d'obtenir 24 ou 30 voies téléphoniques par jonction (normes CCITT).

Une matrice temporelle symétrique connue (MTS) est décrite dans le document FR—A—2 341 999, elle permet de commuter les échantillons transmis par huit jonctions temporelles entrantes à destination de huit jonctions temporelles sortantes de manière qu'un échantillon transmis par l'une des voies de jonction entrante puisse être commuté vers n'importe laquelle des jonctions sortantes. Des circuits internes d'adressage permettent de modifier l'organisation des 256 chemins spatio-temporels possibles sous la commande d'un signal extérieur.

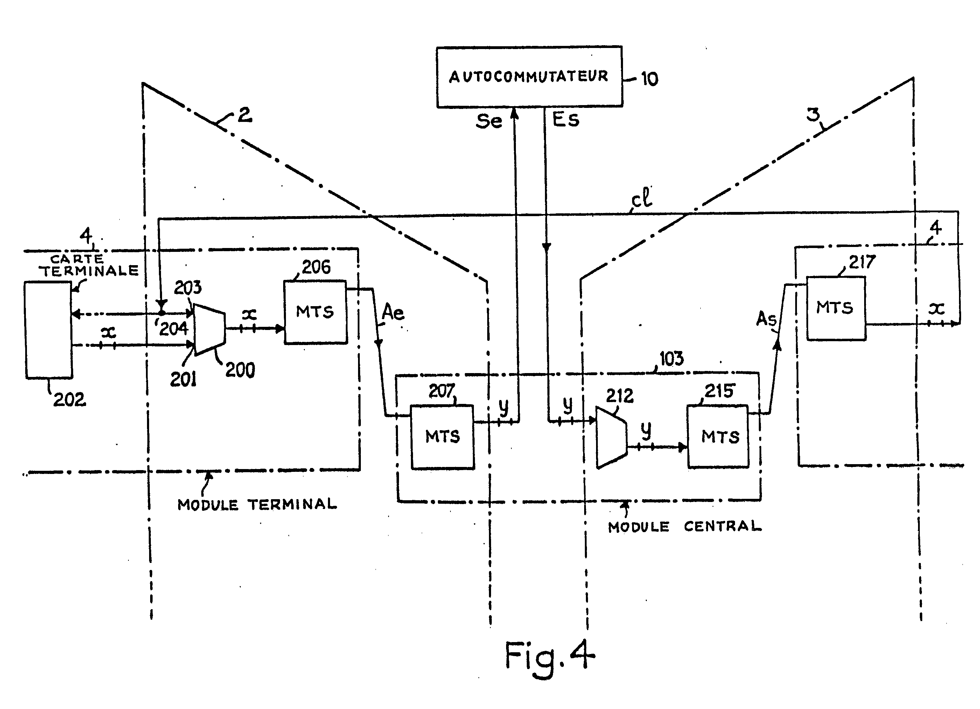

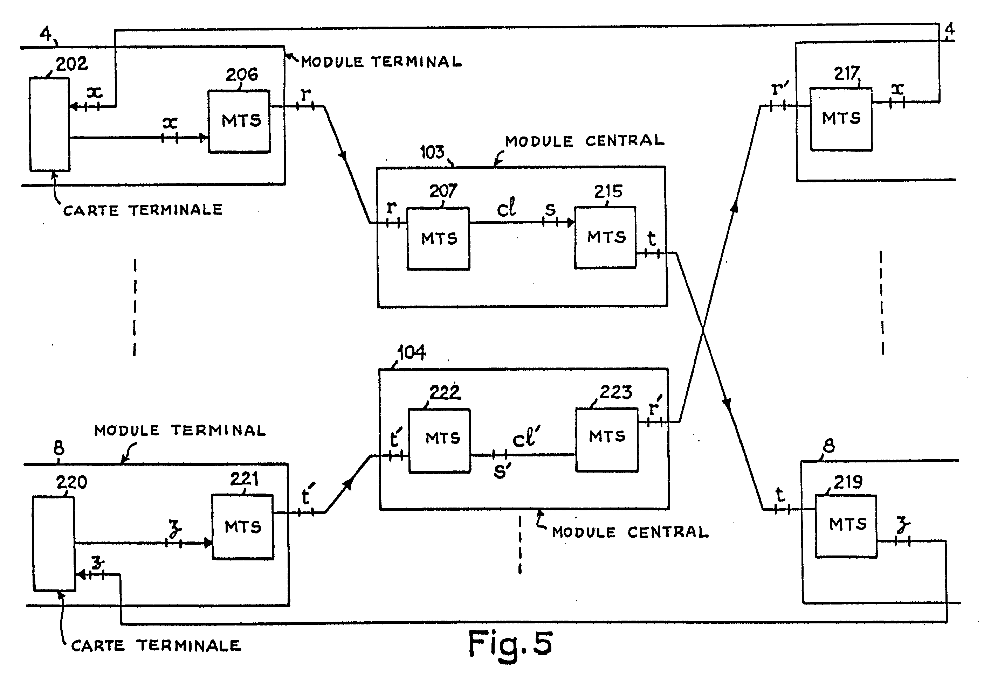

On connaît d'après le document FR—A—2 370 393 (figure 4) un dispositif concentrateur-déconcentrateur comportant, en tant qu'éléments de commutation spatio-temporels des MTS, dispositif à rapport de concentration (ou de déconcentration) fixe. Ce dispositif n'est pas symétrique ne prévoit pas d'entrées d'injection de tonalités et de signaux de test, et il n'est pas modulaire: si on veut augmenter le trafic, il faut utiliser trois étages de matrices (figure 5), ce qui complique la réalisation du dispositif. En outre, le dispositif de la figure 4 de ce document, bien que simple, ne présente pas les avantages que l'on pourrait attendre d'un circuit concentrateur-déconcentrateur à deux étages: du fait que les entrées Je11 à Je16 et Je22 à Je28 des deux MTS utilisées sont toutes reliées aux abonnés, c'est-à-dire branchées en parallèle vis-à-vis des abonnés, une panne de MTS1 paralyse l'ensemble du concentrateur. Par contre, dans un dispositif concentrateur-déconcentrateur à deux étages, une panne du premier étage ne perturbe qu'un faible nombre d'abonnés, et une panne du deuxième étage augmente légèrement le taux be blocage.

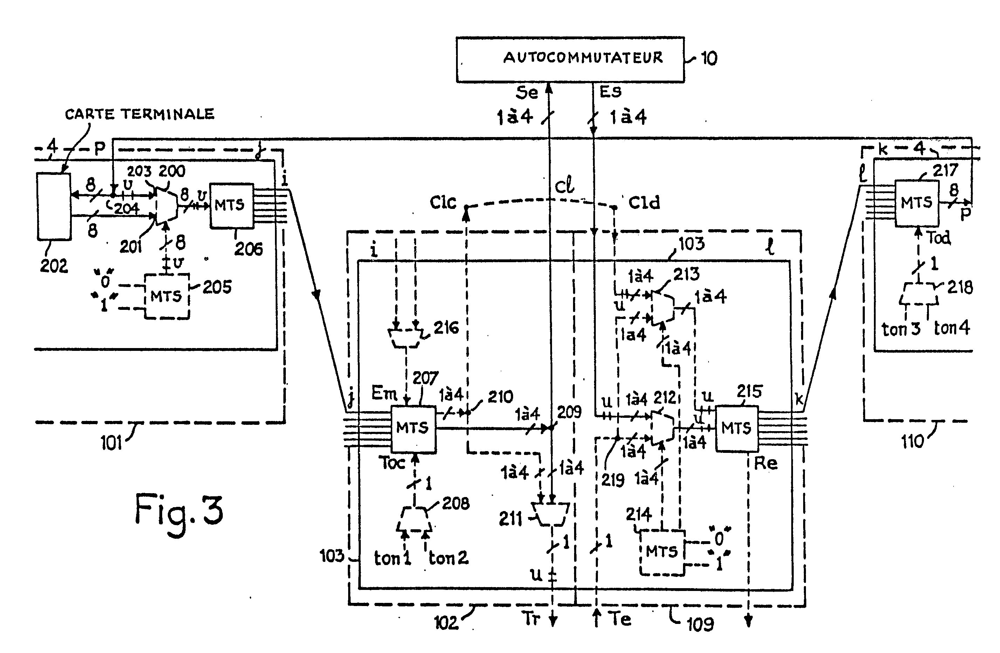

L'article des pages 25 à 32 de M. REVEL paru dans "Commutation et Electronique no. 55 de novembre 1976, mentionne deux techniques différentes de réalisation d'un concentrateur: spatial ou temporel (voir fig. 7 p. 32). Dans le cas où ce concentrateur est à deux étages (figures 3 et 6), les signaux provenant des abonnés ne sont numérisés en code MIC qu'à la sortie du concentrateur, ce qui complique le traitement de concentration (ou de déconcentration). Cet article envisage, en tant que solution d'avenir, le codage MIC par codec commun à 32 abonnés ou individuel, mais ne suggère qu'un "réseau de connexion numérique" pour effectuer la concentration, sans détailler la réalisation d'un tel réseau.

La présente invention a pour objet un dispositif concentrateur-déconcentrateur numérique à deux étages, comportant, en tant qu'éléments de commutation spatio-temporels des MTS, qui soit symétrique, décentralisé et modulaire, ne présente pas les inconvénients des dispositifs connus, et ait un rapport de concentration facilement modifiable.

Selon une caractéristique de l'invention le dispositif concentrateur-déconcentrateur comporte une partie centralisée composée de modules centraux communs au concentrateur et au déconcentrateur et de parties décentralisées appartenant respectivement l'une au concentrateur du dispositif et l'autre au déconcentrateur, ces parties décentralisées étant associées aux modules terminaux contenant les équipements d'abonnés et de circuits, les modules centraux communs comportent chacun des matrices temporelles symétriques insérées entre les jonctions MIC d'autocommutateur et les jonctions MIC d'abonnés, et les modules terminaux comportent chacune des matrices temporelles symétriques insérées entre les jonctions MIC d'abonnés et les équipements d'abonnés et de circuits.

Les objets et caractéristiques de la présente invention apparaîtront plus clairement à la lecture de la description suivante d'exemples de réalisation, ladite description étant faite en relation avec les dessins ci-annexés dans lesquels:
—la figure 1 représente le schéma synoptique du dispositif concentrateur-déconcentrateur et de son environnement;
—la figure 2 décrit schématiquement la structure du dispositif concentrateur-déconcentrateur;
—la figure 3 représente une partie modulaire de base du dispositif concentrateur-déconcentrateur;

—la figure 4 est un schéma simplifié montrant la symétrie des chemins établis à travers le dispositif concentrateur-déconcentrateur;

—la figure 5 présente d'une manière simplifiée, un exemple de chemins aller et retour établis entre deux abonnés en commutation locale.

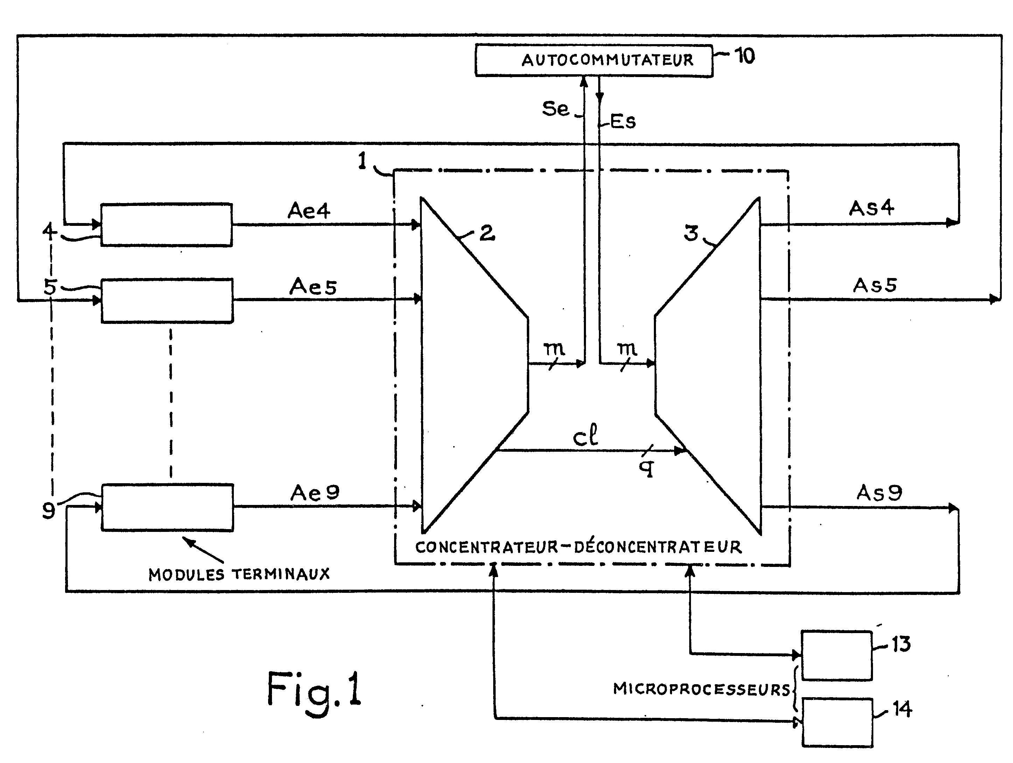

Le dispositif de concentration 1 présenté figure 1 est constitué d'un concentrateur 2 et d'un déconcentrateur 3 et il est relié à un autocommutateur 10. Le concentrateur 2 est relié par sa sortie à l'entrée du déconcentrateur 3 au moyen de q connexions locales C1. Les entrées du concentrateur 2 sont constituées par n jonctions MIC d'abonnés Ae, issues de p modules terminaux référencés 4 à 9, n étant préférablement multiple de p. Les p modules terminaux constituent une unité terminale. Les sorties du concentrateur 2 sont reliées par m jonctions MIC d'autocommutateur Se à l'autocommutateur 10, m étant inférieur à n.

De manière symétrique les entrées du déconcentrateur 3 sont reliées à l'autocommutateur 10 par m jonctions MIC d'autocommutateur référencées Es et les sorties du déconcentrateur 3 sont reliées aux modules terminaux par n jonctions MIC d'abonnés As.

Dans un exemple préféré de réalisation, $n \leqslant 48$, $p \leqslant 6$ et $2 \leqslant m \leqslant 24$ chaque module terminal étant relié à 8 jonctions d'abonnés Ae et à 8 jonctions d'abonnés As, $2 \leqslant q \leqslant 24$ liaisons locales reliant le concentrateur 2 au déconcentrateur 3.

Deux microprocesseurs 13 et 14 assurent classiquement la commande du dispositif 1 et plus particulièrement des matrices temporelles symétriques.

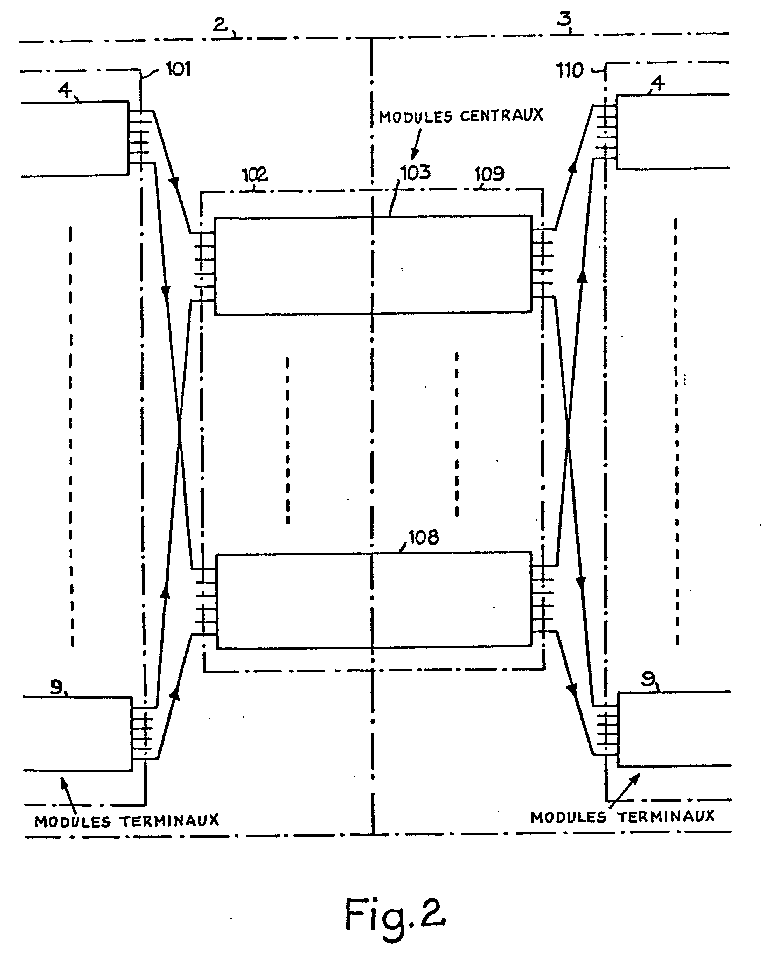

La figure 2 est une description schématique de la structure du dispositif concentrateur-déconcentrateur 1. Pour simplifier le dessin on n'a pas représenté les jonctions Se et Es et les connexions locales C1 à l'intérieur du dispositif concentrateur-déconcentrateur 1. Le concentrateur 2 est constitué d'un premier étage 101 décentralisé formé des p modules terminaux 4 à 9 et d'un second étage centralisé 102 formé de la partie concentration de "r" modules centraux référencés 103 à 108, le nombre r de ces modules centraux variant préférablement d'un minimum de 2 pour des raisons de sécurité à un maximum de 6 en fonction du trafic à écouler.

Symétriquement, le déconcentrateur 3 est constitué d'un premier étage centralisé 109, formé de la partie déconcentration des r modules centraux référencés 103 à 108, et d'un second étage 110, décentralisé, formé des p modules terminaux 4 à 9.

La figure 3 représente une partie modulaire de base du dispositif concentrateur-déconcentrateur 1, c'est-à-dire, d'une part, une partie du premier étage 101 du concentrateur 2 et une partie du second étage 110 du déconcentrateur 3, situées par exemple dans le module terminal 4, ainsi que, d'autre part, une partie du second étage 102 du concentrateur 2 et une partie du premier étage 109 du déconcentrateur 3, situées, par exemple, dans le module central 103.

En référence aux figures 2 et 3, le premier étage décentralisé 101 du concentrateur 2 comprend, dans chaque module terminal tel que le module terminal 4, un groupe de multiplexeurs 200 constitué par exemple de 8 multiplexeurs; pour simplifier le dessin de la figure 3, on n'a représenté qu'un seul de ces multiplexeurs.

Chaque multiplexeur du groupe de multiplexeurs 200 reçoit sur une entrée 201 une jonction MIC issue d'un ensemble de cartes terminales 202 comprenant toutes les cartes terminales contenues dans le module terminal 4, sachant que les équipements d'abonnés et de circuits d'un module sont répartis sur ces cartes terminales et que le nombre total d'équipements d'un module est préférablement limité à 256. Une seconde entrée 203 de chaque multiplexeur du groupe de multiplexeurs 200 reçoit une jonction MIC reliée à un point de connexion d'un ensemble des points de connexion 204.

Chaque point de connexion de l'ensemble des points de connexion 204 est connecté à 1 jonction de retour vers l'ensemble des cartes terminales 202.

L'étage décentralisé 101 comporte en outre, dans chaque module terminal tel que le module terminal 4, une première matrice temporelle symétrique 205 ayant deux entrées, reliées l'une à un "0", l'autre à un "1" logiques. Les jonctions de sortie de la matrice 205 adressent les multiplexeurs du groupe 200. Les jonctions de sortie de ce groupe de multiplexeurs 200 constituent les entrées d'une seconde matrice temporelle symétrique 206, dont une partie des sorties constitue les sorties du premier étage 101 du concentrateur 2. Les autres sorties de la matrice 206 ne sont pas utilisées.

Dans une variante préférée les matrices temporelles symétriques sont du type 8 par 8 et les matrices 206 comportent deux sorties inutilisées.

Le second étage centralisé 102 du concentrateur 2 comprend une matrice temporelle symétrique dans chaque module central telle que la matrice 207 dans le module central 103. Six entrées de le matrice 207 sont reliées au premier étage 101 de manière que la sortie no. i $(1 \leqslant i \leqslant 6)$ du module terminal no. j $(1 \leqslant j \leqslant 6)$, constituée par une sortie d'une MTS telle que la matrice 206 est reliée à l'entrée no. j du module central no. i, constituée par une entrée d'une matrice temporelle symétrique telle que la matrice 207.

Une autre entrée Em de la matrice 207 reçoit la signalisation émise, pour des raisons de sécurité, par deux entrées du multiplexeur 216. Cette signalisation est émise vers l'autocommutateur 10.

Une dernière entrée Toc de la matrice 207 reçoit des tonalités ton 1 ou ton 2 transmises par un multiplexeur 208 et à émettre également vers l'autocommutateur 10.

Les sorties de la matrice 207 sont connectées, d'une part, à 1 à 4 jonctions MIC Se dirigées vers l'autocommutateur 10 et, d'autre part, à 1 à 4 jonctions MIC C1c servant à établir des connexions locales C1. Ces deux groupes de jonctions sont également connectés aux entrées d'un multiplexeur 211. La sortie Tr du multiplexeur 211 est reliée à un dispositif de test qui permet de contrôler la continuité d'un chemin établi à travers le dispositif concentrateur-déconcentrateur 1.

Le premier étage centralisé 109 du déconcentrateur 3 comprend, dans chaque module central tel que le module central 103, deux groupes de multiplexeurs 212 et 213, constitués chacun de 1 à 4 multiplexeurs, ainsi que deux matrices temporelles symétriques 214 et 215. Pour simplifier le schéma de la figure 3, on n'a représenté qu'un seul multiplexeur de chacun des 2 groupes de multiplexeurs 212 et 213. A l'intérieur de chacun des deux groupes de multiplexeurs 212 et 213, chaque multiplexeur reçoit en entrée une jonction de test Te.

Chaque multiplexeur du groupe de multiplexeurs 212 reçoit aussi en entrée une jonction Es en provenance de l'autocommutateur 10 et chaque multiplexeur du groupe de multiplexeurs 213 reçoit en entrée une jonction C1d elle-même connectée à une des jonctions C1c, précédemment décrites, par l'intermédiaire d'une jonction C1 de connexion locale.

La matrice 214 a 2 entrées reliées, l'une à un "0" logique, l'autre à un "1" logique. Parmi les 8 jonctions de sortie de la MTS 214, 1 à 4 jonctions adressent les 1 à 4 multiplexeurs du groupe 212 et les 1 à 4 autres jonctions adressent les 1 à 4 multiplexeurs du groupe 213.

Les 1 à 4 jonctions de sortie dans 1 à 4 multiplexeurs du groupe 212 et les 1 à 4 jonctions de sortie des 1 à 4 multiplexeurs du groupe 213 sont reliées à des entrées de la matrice 215. Une sortie Re de la matrice 215 restitue la signalisation émise par l'autocommutateur 10 sur une des jonctions Es et à travers un multiplexeur du groupe de multiplexeurs 212. Le second étage décentralisé 110 du déconcentrateur 3 comprend dans chaque module terminal tel que le module terminal 4 une matrice temporelle symétrique 217 dont certaines entrées prévues au nombre de 6 dans la solution présentée, sont reliées au premier étage 109 en respectant le principe de connexion des premier et second étages 109 et 110 décrit précédemment: la sortie no. K ($1 \leqslant k \leqslant 6$) du module central no. I ($1 \leqslant I \leqslant 6$), constituée par une sortie de matrice, telle que 215, est reliée à l'entrée no. I du module terminal no. k, constituée par une entrée de matrice telle que 217. Une autre entrée Tod de la matrice 217 reçoit des tonalités ton 3 ou ton 4 transmises par un multiplexeur 218. Chacune des huit jonctions de sortie de la matrice 217 est reliée à un point de connexion de l'ensemble des points de connexion 204, situé dans le premier étage 101 du concentrateur 2.

Le fonctionnement du circuit selon l'invention est décrit ci-après en référence aux figures 1, 2, 3, 4, et 5. Dans l'exemple présenté le dispositif concentrateur-déconcentrateur 1 assure la concentration de 48 jonctions MIC d'abonnés Ae à 32 voies, sur 2 à 24 jonctions MIC d'autocommutateur Se à 32 voies et inversement, l'aiguillage de 2 à 24 jonctions MIC d'autocommutateur Es sur 48 jonctions MIC d'abonnés As.

Le dispositif concentrateur-déconcentrateur 1 assure aussi des fonctions annexes comme l'établissement de communications locales entre deux abonnés, un abonné et un circuit, ou deux circuits appartenant à la même unité terminale d'abonnés, l'émission de tonalités, la transmission de la signalisation en direction et en provenance de l'autocommutateur 10 ainsi que le test de continuité d'un chemin établi à travers le dispositif concentrateur-déconcentrateur 1.

Sur le schéma de la figure 3, les éléments intervenant dans la réalisation de la fonction principale concentration-déconcentration sont représentés en trait plein et les éléments intervenant dans les fonctions annexes sont représentés en traits pointillés.

La fonction concentration concerne les premier et second étages 101 et 102 du concentrateur 2. Dans la partie du premier étage 101, située dans le module terminal 4, la matrice temporelle symétrique 205 reçoit d'un des microprocesseurs 13 et 14, des instructions ordonnant ou non le test de continuité d'un chemin spatio-temporel établi dans le dispositif concentrateur-déconcentrateur 1. Dans le cas où aucun test n'est ordonné, la valeur logique "1" n'est transmise sur aucune des voies des 8 jonctions de sortie de la matrice 205. Les multiplexeurs du groupe de multiplexeurs 200 adressés par des "0" logiques présentent sur leurs sorties les états des 8 jonctions en provenance de l'ensemble 202 des cartes terminales du module terminal 4. La matrice temporelle symétrique 206 concentre les signaux numériques reçus de ces 8 jonctions sur 1 à 6 jonctions sortantes suivant l'importance du trafic. Les échantillons numériques transmis au cours des intervalles de temps IT disponibles sur les jonctions d'entrée de la matrice 206 se voient attribuer des intervalles de temps disponibles sur les 1 à 6 jonctions de sortie d'après les instructions reçues par cette matrice 206.

Les jonctions de sortie de la matrice 206 sont raccordées chacune à un module central suivant le principe de connexion des étages 101 et 102 énoncé précédemment.

Dans le module central 103, la matrice 207 concentre les échantillons reçus via les 6 jonctions Ae issues des 6 modules terminaux, tels que le module terminal 4, sur 1 à 4 jonctions Se. Le rapport de concentration de chaque module central varie donc de 3/2 à 6 dans le cas d'un équipement maximum de l'unité terminale d'abonnés.

La fonction déconcentration concerne les premier et second étages 109 et 110 du déconcentrateur 3. Dans le premier étage 109, la matrice 214 reçoit en provenance d'un des microprocesseurs 13 et 14, des instructions ordonnant ou non le test de continuité d'un chemin spatio-temporel établi dans le dispositif concentrateur-déconcentrateur 1. Dans le cas où aucun test n'est ordonné, la valeur logique "1" n'est transmise sur aucune des voies des 8 jonctions de sortie de la MTS 214. Les multiplexeurs du groupe de multiplexeurs 212, adressés par des "0" logiques, présentent en sortie les états des jonctions d'entrée Es.

La matrice 215 transfère les états des jonctions de sortie de chacun des multiplexeurs du groupe 212 sur les jonctions sortantes As. Ces jonctions As sont raccordées aux parties du second étage 110 situées dans les modules terminaux suivant le principe de connexion des étages 109 et 110 énoncé précédemment.

Dans le module terminal 4, la matrice 217 aiguille les jonctions d'entrée Ae provenant des modules centraux vers les jonctions de sortie, chacune d'elles étant reliée à un point de connexion de l'ensemble des points de connexion 204 situé dans l'étage 101, de façon à ce que ces jonctions soient connectées aux jonctions correspondantes, en direction de l'ensemble 202 des cartes terminales.

Comme le montre le schéma simplifié de la figure 4, il y a symétrie des chemins spatio-temporels établis à travers le concentrateur 2 et le déconcentrateur 3, dans le cas d'une communication entre 2 abonnés A et B n'appartenant pas à la même unité terminale d'abonnés. Soit un signal vocal d'abonné A provenant d'un ensemble de cartes terminales tel que l'ensemble 202 situé dans le module terminal 4 qui soit présenté sur une voie x, à l'entrée 201 puis à la sortie d'un multiplexeur appartenant au groupe de multiplexeurs 200. Cette voie x est connectée à une voie y de jonction Se par l'intermédiaire des matrices 206 et 207.

Symétriquement, en retour de l'autocommutateur 10, un échantillon de signal vocal, en provenance de l'abonné B en communication avec l'abonné A, se retrouve sur une voie y de jonction Es, à l'entrée du déconcentrateur 3 et, plus précisément à l'entrée du même module central que celui utilisé par le concentrateur 2 pour acheminer l'échantillon de signal vocal de l'abonné A vers l'autocommutateur 10, en l'occurrence dans l'exemple choise, le module central 103. Cette voie y est connectée à une voie x par l'intermédiaire d'un multiplexeur du groupe de multiplexeurs 212 et des MTS 215 et 217, cette voie x est elle-même reliée à la voie x correspondante de retour vers l'ensemble des cartes terminales tel que l'ensemble 202 situé dans le module terminal 4.

Des communications locales peuvent être établies directement, sans passage par l'autocommutateur 10, entre 2 abonnés A et C dont les équipements sont situés dans la même unité terminale d'abonnés. L'échantillon de signal vocal provenant d'un abonné A dont le poste est connecté à une carte terminale de l'ensemble 202, est émis à travers un multiplexeur du groupe de multiplexeurs 200 et la matrice 206. Cet échantillon transmis par la jonction Ae de rang i sortant de la matrice 206 est dirigé vers le module central de rang i. Dans le cas où par exemple i = 1 et où le module terminal concerné est le module terminal 4, l'échantillon se présente sur la première jonction d'entrée de la matrice 207 dans le module central 103. Les instructions reçues par la matrice 207 commandent la sortie de l'échantillon sur une des quatre jonctions C1c. La jonction C1c choisie est reliée à une jonction C1d correspondante par une connexion locale C1 de sorte que l'échantillon de signal vocal est retransmis à travers un multiplexeur du groupe de multiplexeurs 213 sur entrée de la matrice 215. Les instructions reçues par cette matrice 215 déterminent, suivant le module terminal dans lequel se trouve la carte terminale correspondant à l'abonné C, la jonction As de rang k de la matrice 215 sur laquelle l'échantillon sera transmis. Comme le module central concerné est le module 103 dans l'exemple choisi, l'échantillon passe de cette jonction As de rang k à la première jonction d'entrée de la matrice 217, dans le module terminal de rang k, soit le module terminal 4. L'échantillon de signal vocal parvient alors à l'abonné C dont le poste est raccordé à l'ensemble de cartes terminales.

Le schéma de la figure 5 présente d'une manière simplifiée un exemple de chemins aller et retour établis entre les abonnés A et C en communication locale dont la liaison de A vers C a été détaillée précédémment à partir de la figure 3. En résumé, un échantillon de signal vocal présenté sur la voie x à l'entrée de la matrice 206 du module terminal 4, est transmis sur une voie r de la première jonction de sortie de la matrice 206 et, par suite, sur une voie r de la première jonction d'entrée de la matrice 207 du module central 103. Par l'intermédiaire de la matrice 207, cette voie r est connectée à une voie s d'une jonction locale C1 et donc d'une jonction d'entrée de la matrice 215. En supposant que le module terminal de rang k dans lequel se trouve la carte terminale correspondant à l'abonné C soit, parmi les modules terminaux 4 à 9 présentés à la figure 2 —soit le module terminal 8 dans le cas où k = 5—, l'échantillon de signal vocal de l'abonné A se retrouve sur une voie t de la cinquième jonction de sortie de la matrice 215. Par suite cet échantillon se retrouve également sur la voie t de la première jonction d'entrée d'une matrice temporelle symétrique 219 du module terminal 8, équivalente de la matrice 217 du module terminal 4. Par l'intermédiaire de la matrice 219 l'échantillon se présente sur une voie z d'une jonction de sortie de cette matrice 219, jonction qui est connectée à une jonction de retour vers l'ensemble des cartes terminales 220 comprenant l'équipement d'abonné C.

En retour, l'échantillon de signal vocal d'abonné C est présenté sur la voie z à l'entrée d'une matrice temporelle symétrique 221 du module terminal 8. les instructions reçues par la matrice 221 commandent la sortie de l'échantillon sur une voie t' d'une jonction de sortie de rang i de la matrice 221. Dans le cas où, par exemple, i = 2, l'échantillon se présente alors sur une voie t' de la vingt et unième jonction de sortie de la matrice 221 puis sur une voie t' de la cinquième jonction d'entrée d'une matrice temporelle symétrique 222 du module central 104. Par l'intermédiaire de la matrice 222, cette voie t' est connectée à une voie s' d'une jonction locale C1' donc d'une jonction d'entrée d'une matrice temporelle symétrique 223. L'échantillon de signal vocal de l'abonné C se retrouve sur une voie r' de la première jonction de sortie de la matrice 223 et, par suite, sur une voie r' de la seconde jonction d'entrée de la matrice 217 du module terminal 4. L'échantillon se présente sur la voie x d'une jonction de sortie de la matrice 217, jonction qui est connectée à une jonction de retour vers l'ensemble des cartes terminales 202 comprenant l'équipement d'abonné A.

Les chemins aller et retour entre les équipements d'abonnés A et C ont été décrits dans un cas général en ce qui concerne les voies sur lesquelles se présentent tour à tour les échantillons de signal vocal d'abonnés A et C.

Il est à préciser que, pour des raisons de simplification, lorsque les modules centraux choisis pour l'aller et le retour sont les mêmes, les chemins établis à travers le dispositif concentrateur-déconcentrateur 1 le sont de façon telle que: t = t', r = r'.

Le dispositif concentrateur-déconcentrateur 1 assure également l'émission de tonalités, d'une part vers l'ensemble des cartes terminales tel que l'ensemble 202 situé dans le module terminal 4, d'autre part vers l'autocommutateur 10. Dans le premier cas les tonalités doivent être émises sans blocage. C'est pourquoi l'émission de ces tonalités est effectuée à partir du deuxième étage 110 du déconcentrateur 3. Ainsi, en référence à la figure 3, l'une des tonalités ton 3 et ton 4, présentées à l'entrée du multiplexeur 218, est transmise par le multiplexeur 218 sur la jonction d'entrée Tod puis sur la jonction As de rang p de la matrice 217. Cette p ième jonction As étant reliée à un point de connexion de l'ensemble des points de connexion 204 situé dans le premier étage 101 du concentrateur 2, la tonalité ton 3 ou ton 4 est émise vers la p ième jonction d'abonné retournant vers l'ensemble des cartes terminales 202.

Dans une variante du dispositif concentrateur-déconcentrateur 1, les tonalités ton 3 et ton 4 sont directement émises sur les deux entrées disponibles restantes de la matrice 217. Le multiplexeur 218 est donc supprimé.

L'émission des tonalités vers l'autocommutateur 10 s'effectue à partie du deuxième étage 102 du concentrateur 2. Ainsi, dans le module central 103, l'une des tonalités ton 1 et ton 2 présentées à l'entrée du multiplexeur 208, est transmise par ce multiplexeur 208, sur la jonction d'entrée Toc puis sur une des quatre jonctions Se de la matrice 207.

En référence aux figures 2 et 3, la signalisation en direction de l'autocommutateur 10 est émise sur deux entrées, ceci pour des raisons de sécurité, de multiplexeurs, tels que le multiplexeur 216, situés le deuxième étage 102 du concentrateur 2. Cette signalisation est ensuite transmise sur les entrées Em des matrices telles que 207 puis, sur des jonctions Se déterminées au préalable.

En retour de l'autocommutateur 10, la signalisation émise sur de jonctions Es, déterminées au préalable, est transmise, à travers des multiplexeurs de groupes de multiplexeurs, tels que le groupe 212, vers les matrices telles que 215. Cette signalisation se retrouve sur les sorties Re des matrices telles que 215.

La description du principe des tests de continuité est faite en référence aux figures 1, 2 et 3. Un chemin correspondant à une communication non locale peut avoir été établi entre un abonné A dont le poste est raccordé à une carte terminale d'un ensemble tel que, par exemple, l'ensemble 202 situé dans le module terminal 4, et un abonné B dont le poste n'est pas relié au dispositif concentrateur-déconcentrateur 1. Ou bien un chemin correspondant à une communication locale peut avoir été établi entre l'abonné A et un abonné C dont le poste est raccordé à une carte terminale d'un ensemble tel que l'ensemble 202, situé dans un des modules terminaux 4 à 9.

Dans les deux cas, un test de continuité consiste à contrôler la continuité du chemin établi à travers le dispositif concentrateur-déconcentrateur 1 entre les deux abonnés A et B ou A et C, sans modifier le fonctionnement dudit dispositif concentrateur-déconcentrateur 1.

Dans le premier étage 109 du déconcentrateur 3, par exemple dans la partie déconcentration du module central 103, les instructions de commande reçues par la matrice 214 ont pour effet, dans le cas où un test est ordonné relativement à une voie u d'une jonction d'entrée Es ou C1 d'un multiplexeur appartenant à l'un des groupes 212 ou 213, la présence d'un "1" logique sur une voie u de l'une des huit jonctions de sortie de la matrice 214, jonction adressant le multiplexeur à tester d'un des groupes 212 et 213.

Un code de test émis sur le fil Te et se présentant, à partir du point de connexion 219, sur une jonction d'entrée de chacun des multiplexeurs des groupes 212 et 213, se retrouve alors sur la voie u de la jonction de sortie du multiplexeur à tester.

Par contre, les autres voies des jonctions de sortie de la matrice 214 présentent un "0" logique et les échantillons de signaux vocaux portés par les voies qui ne sont pas à tester des jonctions d'entrée Es ou Cl des multiplexeurs des groupes 212 et 213, se retrouvent sur les jonctions de sortie de ces multiplexeurs que ne sont pas à tester.

Le code de test, présenté sur la voie u d'une jonction d'entrée de la matrice 215, est aiguillé sur une jonction de sortie de la matrice 215. Dans le cas d'un chemin établi entre les abonnés A et B, il est transmis sur une jonction d'entrée de la matrice 217. Dans le cas d'un chemin établi entre les abonnés A et C, il est transmis sur une jonction d'entrée d'une matrice, telle que 217, située dans un des modules terminaux 4 à 9 correspondant à l'abonné C. Le code est alors émis sur une p ième jonction As de sortie du déconcentrateur 3.

Dans la partie du premier étage 101 du concentrateur 2 située soit, dans le module terminal 4, dans le cas d'un chemin établi entre les abonnés A et B, soit dans un des modules terminaux 4 à 9 dans le cas d'un chemin établi entre les abonnés A et C, la matrice 205 ou une matrice équivalente, présente, suivant les instructions reçues, un "1" logique sur une voie v de la p ième jonction de sortie et des "0" logiques sur les autres voies des jonctions de sortie.

En prenant pour exemple le module terminal 4, l'entrée 203 d'un des multiplexeurs du groupe de multiplexeurs 200, adressé sur la p ième jonction de sortie de la matrice 205, est alors validée uniquement pour la voie v qui est réémise en sortie de la partie décentralisée du concentrateur 2.

Le code de test transmis sur la voie v de la p ième jonction de sortie d'une matrice telle que 217, est donc transmis sur la voie v de la jonction correspondante à l'entrée 203 du p ième multiplexeur du groupe de multiplexeurs 200. Ce code est ensuite transmis sur la voie v de la p ième jonction d'entrée et sur une i ième jonction de sortie de la matrice 206 puis, dans l'exemple choisi, sur une jonction d'entrée de la matrice 207 du module central 103, ceci en raison de la symétrie exposée précédemment des chemins établis dans le dispositif concentrateur-déconcentrateur 1.

En sortie de la matrice 207, le code est émis, par l'intermédiaire des points de connexion 209 (dans le cas d'un chemin établi entre les abonnés A et B) ou 210 (dans le cas d'un chemin établi entre les abonnés A et C), sur une voie u d'une jonction d'entrée du multiplexeur 211. La jonction de sortie de ce multiplexeur 211 étant reliée à la jonction Tr. Le code de test se retrouve sur la voie u de cette dernière, ceci, en raison de la symétrie du chemin établi si le chemin à travers le dispositif concentrateur-déconcentrateur 1 a été correctement établi.

Un dispositif de concentration, de par sa conception même, ne peut fonctionner sans un certain risque de blocage. Ce risque de blocage est évalué, par exemple dans le concentrateur 2, à partir d'un taux de blocage B, lui-même calculé en fonction du nombre d'IT de sortie nl (nl = 32 no, no représentant le nombre de jonctions sortantes) et du trafic total d'entrée $A = Ml\alpha$, ml étant le nombre d'IT d'entrée (ml = 32 mo, mo représentant le nombre de jonctions entrantes) et $\alpha$ le trafic par entrée, supposé constant d'une entrée à l'autre du concentrateur 2.

$$B(nl, A) = \frac{A^{nl}/nl\ !}{\Sigma_{i=0}^{i=nl}\ A^{i}/i!}$$

Les normes d'exploitation et de fonctionnement, établies par l'administration française des télécommunications, imposent un taux de blocage nominal inférieur à $5 \times 10^{-3}$ et un taux de blocage en surcharge (c'est-à-dire avec 20% du trafic supplémentaire) inférieur à $10^{-2}$. Ce dernier taux étant le plus contraignant, les résultats du tableau ci-après sont calculés de façon à obtenir:

B (nl, A surcharge) inférieur à $10^{-21}$.

| no | $\dfrac{mo}{no}$ | Asurch. (Erlang) | Anom. (Erlang) | $\alpha$nom. |
|----|----|----|----|----|
| 2 | 24 | 50 | 42 | 0,028 |
| 3 | 16 | 80 | 67 | 0,043 |
| 4 | 12 | 110 | 92 | 0,060 |
| 5 | 9,6 | 140 | 117 | 0,075 |
| 6 | 8 | 173 | 144 | 0,095 |
| 8 | 6 | 230 | 192 | 0,125 |
| 10 | 4,8 | 297 | 248 | 0,160 |
| 12 | 4 | 359 | 299 | 0,195 |
| 14 | 3,4 | 423 | 353 | 0,230 |
| 16 | 3 | 486 | 405 | 0,265 |
| 18 | 2,6 | 550 | 458 | 0,30 |
| 20 | 2,4 | 613 | 511 | 0,33 |
| 24 | 2 | 740 | 617 | 0,40 |

Ledit tableau donne, en fonction du nombre de jonctions sortantes no, le rapport de concentration

$$\frac{mo}{no},$$

mo étant fixé à 48, nombre maximal de jonctions entrantes dans le concentrateur 2, le taux de blocage en surcharge Asurch, le taux de blocage Anom, le trafic nominal par entrée

$$\alpha nom = \frac{Anom.}{32 \times 48}.$$

**Revendications**

1. Dispositif concentrateur-déconcentrateur, destiné à être associé à un autocommutateur téléphonique temporel et à établir des chemins spatio-temporels entre des jonctions MIC, dites d'abonnés, reliées à un ensemble d'équipements d'abonnés et de circuits et des jonctions MIC, dites d'autocommutateur reliées à l'autocommutateur, ce dispositif comportant, en tant qu'éléments de commutation spatio-temporels, des matrices temporelles symétriques (MTS), et étant du type à deux étages, ce dispositif étant caractérisé en ce qu'il comporte une partie centralisée (102) composée de modules centraux (103 ... 108) communs au concentrateur (2) et au déconcentrateur (3) et de parties décentralisées (101) appartenant respectivement l'une au concentrateur du dispositif et l'autre au déconcentrateur, ces parties décentralisées étant comprises dans des modules terminaux (4 ... 9) contenant les équipements d'abonnés et de circuits, en ce que les modules centraux communs (103 ... 108) comportent chacun des matrices temporelles symétriques (207, 215) insérées entre les jonctions MIC d'autocommutateur (Se, Es) et les jonctions MIC d'abonnés (Ae, As) et en ce que les modules terminaux comportent chacun des matrices temporelles symétriques (206, 217) insérées entre les jonctions MIC d'abonnés et les équipements d'abonnés et de circuits (202).

2. Dispositif concentrateur-déconcentrateur selon la revendication 1, caracté-risé en ce que chaque module terminal comporte une "première" matrice temporelle symétrique (206) dont les entrées sont reliées par un premier groupe de multiplexeurs (200) aux équipements d'abonnés et de circuits (202) du module terminal (4) via des jonctions MIC et dont au moins deux sorties sont reliées aux entrées de la partie centralisée (102), ainsi qu'une "seconde" matrice temporelle symétrique (217) reliée par au moins deux entrées aux sorties de la partie centralisée et par ses sorties aux équipements d'abonnés et de circuits (202) via des jonctions MIC.

3. Dispositif concentrateur-déconcentrateur selon la revendication 1, caractérisé en ce que chaque module central comporte une matrice temporelle symétrique dite troisième matrice temporelle symétrique (207), reliée par au moins une entrée, dite entrée de la partie centralisée, à une sortie de la première matrice temporelle symétrique (206) et par ses sorties à des jonctions MIC d'autocommutateur (Se) et de connexion locale (c1), ainsi qu'une matrice temporelle symétrique (215), dite quatrième matrice temporelle symétrique, reliée par ses entrées à des jonctions MIC d'autocommutateur (Es) via un groupe de multiplexeurs (212) dit second groupe de multiplexeurs et de connexion locale via un autre groupe de multiplexeurs (213) dit troisième groupe de multiplexeurs, et dont les sorties dites sorties de la partie centralisée, sont reliées aux entrées des secondes matrices temporelles symétriques (217).

4. Dispositif concentrateur-déconcentrateur selon la revendication 3, caractérisé en ce que les jonctions MIC de connexion locale de sortie de la troisième matrice temporelle symétrique sont reliées une à une aux jonctions MIC de connexion locale de la quatrième matrice temporelle symétrique.

5. Dispositif concentrateur-déconcentrateur selon les revendications 2 et 3, caractérisé en ce que les sorties de la partie décentralisée de concentrateur de chaque module terminal sont individuellement reliées chacune à une entrée de la partie centralisée, par l'intermédiaire de jonctions MIC et en ce que les entrées de la partie décentralisée de deconcentrateur de chaque module terminal sont individuellement reliées chacune à une sortie de la partie centralisée, par l'intermédiaire d'autres jonctions MIC.

6. Dispositif concentrateur-déconcentrateur selon les revendications 2 et 3, caractérisé en ce que chaque seconde matrice temporelle symétrique comporte au moins une entrée de tonalités (Tod) à destination des équipements d'abonnés du module terminal dont fait partie cette matrice, et en ce que chaque troisième matrice comporte une entrée de tonalités (Toc) à destination de l'autocommutateur auquel est relié le dispositif.

7. Dispositif concentrateur-déconcentrateur selon les revendications 2 et 3, caractérisé en ce que chaque troisième matrice temporelle symétrique comporte une entrée de signalisation (Em) à destination de l'autocommutateur (10) auquel est relié le dispositif et en ce que chaque quatrième matrice temporelle symétrique comporte une sortie de signalisation (Re) en provenance de cet autocommutateur.

8. Dispositif concentrateur-déconcentrateur selon les revendications 2 et 3, caractérisé en ce qu'il comporte un dispositif de test des chemins établis comprenant dans chaque module central une matrice temporelle symétrique (214) dite cinquième matrice reliée par deux entrées à des niveaux logiques complémentaires et par ses sorties aux entrées d'adressage des deuxième et troisième groupes de multiplexeurs (212, 213), qui comportent des entrées reliées à des jonctions MIC de test (Te), et comprenant dans chaque module terminal, une matrice temporelle symétrique (205), dite sixième matrice temporelle symétrique reliée par deux entrées à des niveaux logiques complémentaires et par ses sorties aux entrées d'adressage du premier groupe de multiplexeurs (200), qui comportent des entrées reliées à des jonctions MIC de sortie de la seconde matrice temporelle symétrique.

**Patentansprüche**

1. Konzentrator-Dekonzentrator-Vorrichtung, die dazu bestimmt ist, einer Selbstwähl-Telefonvermittlung vom Zeitschalttyp zugeordnet zu werden und Zeit-/Raumwege zwischen PCM-Teilnehmerleitungen, die mit einer Gruppe von Teilnehmerund Schaltkreisausrüstungen verbunden sind, und mit der Telefonvermittlung verbundenen PCM-Anlagenleitungen herzustellen, wobei die Vorrichtung als Zeit-/Raum-Schaltelemente symmetrische Zeitschaltmatrizen (MTS) enthält und vom Zweistu-fentyp ist, dadurch gekennzeichnet, daß die Vorrichtung einen zentralisierten Teil (102) mit zentralen Moduls (103...108), die dem Konzentrator (2) und dem Dekonzentrator (3) gemeinsam angehören, und entweder dem Konzentrator oder dem Dekonzentrator angehörende dezentralisierte Teile (101) aufweist, die in die Teilnehmer- und Schaltkreisausrüstungen enthaltenden Endmoduls (4...9) untergebracht sind, daß die gemeinsamen zentralen Moduls (103...108) je symmetrische Zeitschaltmatrizen (207, 215) zwischen den PCM-Anlagenleitungen (Se, Es) und den PCM-Teilnehmerleitungen (Ae, As) eingefügt aufweisen, und daß die Endmoduls je symmetrische Zeitschaltmatrizen (206, 217) zwischen den PCM-Teilnehmerleitungen und den Teilnehmer- und Schaltkreisausrüstungen (202) eingefügt enthalten.

2. Konzentrator-Dekonzentrator-Vorrichtung nach Anspruch 1, dadurch gekennzeichnet, daß jeder Endmodul eine "erste" symmetrische Zeitschaltmatrix (206), deren Eingänge durch eine erste Gruppe von Multiplexern (200) an die Teilnehmer- und Schaltkreisausrüstungen (202) des Endmoduls (4) über PCM-Anschlüsse angeschlossen sind und von der mindestens zwei Ausgänge mit den Eingängen des zentralisierten Teils (102) verbunden sind, sowie eine "zweite" symmetrische Zeitschaltmatrix (217) aufweist, die mit mindestens zwei Eingängen an die Ausgänge des zentralisierten Teils und mit ihren Ausgängen an die Teilnehmer- und Schaltkreisausrüstungen (202) über PCM-Anschlüsse angeschlossen sind.

3. Konzentrator-Dekonzentrator-Vorrichtung nach Anspruch 1, dadurch gekennzeichnet, daß jeder Zentralmodul eine "dritte" symmetrische Zeitschaltmatrix (207), die mit mindestens einem Eingang, Eingang des zentralisierten Teils genannt, an einen Ausgang der ersten symmetrischen Zeitschaltmatrix (206) und mit ihren Ausgängen an PCM-Anlagenleitungen (Se) und PCM-Ortsverbindungsleitungen (C1) angeschlossen ist, sowie eine "vierte" symmetrische Zeitschaltmatrix (215) enthält, die mit ihren Eingängen an PCM-Anlagenleitungen (Es) über eine Gruppe von Multiplexern (212), zweite Multiplexergruppe genannt, und an PCM-Ortsverbindungsleitungen über eine "dritte" Gruppe von Multiplexern (213) angeschlossen ist und deren "Ausgänge des zentralisierten Teils" genannte Ausgänge an die Eingänge der zweiten symmetrischen Zeitschaltmatrizen (217) angeschlossen sind.

4. Konzentrator-Dekonzentrator-Vorrichtung nach Anspruch 3, dadurch gekennzeichnet, daß die Ausgangs-PCM-Ortsverbindungsanschlüsse der dritten symmetrischen Zeitschaltmatrix je mit einem PCM-Ortsverbindungsanschluß der vierten symmetrischen Zeichschaltmatrix verbunden sind.

5. Konzentrator-Dekonzentrator-Vorrichtung nach den Ansprüchen 2 und 3, dadurch gekennzeichnet, daß die Ausgänge des zentralisierten Konzentrator-Teils jedes Endmoduls einzeln je mit einem Eingang des zentralisierten Teils über PCM-Anschlüsse verbunden sind und daß die Eingänge des dezentralisierten Dekonzentrator-Teils jedes Endmoduls einzeln je mit einem Ausgang des zentralisierten Teils über andere PCM-Anschlüsse verbunden sind.

6. Konzentrator-Dekonzentrator-Vorrichtung nach den Ansprüchen 2 und 3, dadurch gekennzeichnet, daß jede zweite symmetrische Zeitschaltmatrix mindestens einen Eingang für Tonsignale (Tod) besitzt, die für die Teilnehmerausrüstungen des Endmoduls bestimmt sind, zum dem diese Matrix gehört, und daß jede dritte Matrix einen Eingang für Tonsignale (Toc) besitzt, die für die Selbstwahlvermittlung bestimmt sind, mit der die Vorrichtung verbunden ist.

7. Konzentrator-Dekonzentrator-Vorrichtung nach den Ansprüchen 2 und 3, dadurch gekennzeichnet, daß jede dritte symmetrische Zeitschaltmatrix einen Signalisationseingang (Em) für Signale, die für die Selbstwählvermittlung (10) bestimmt sind, an die die Vorrichtung angeschlossen ist, und jede vierte symmetrische Zeitschaltmatrix einen Signalisationsausgang (Re) für Signale besitzt, die von dieser Selbstwählvermittlung stammen.

8. Konzentrator-Dekonzentrator-Vorrichtung nach den Ansprüchen 2 und 3, dadurch gekennzeichnet, daß sie eine Vorrichtung zur Prüfung der aufgebauten Wege besitzt, wobei die Vorrichtung in jedem Zentralmodul eine "fünfte" symmetrische Zeitschaltmatrix (214) aufweist, die mit zwei Eingängen an komplementäre logische Pegel und mit ihren Ausgängen an die Adresseneeingänge der zweiten und dritten Gruppe von Multiplexern (212, 213) angeschlossen sind, welche Eingänge besitzen, die an PCM-Testanschlüsse (Te) angeschlossen sind, und wobei die Vorrichtung in jedem Endmodul eine "sechste" symmetrische Zeitschaltmatrix (205) enthält, die mit zwei Eingängen an komplementäre logische Pegel und mit ihren Ausgängen an die Adresseneingänge der ersten Gruppe von Multiplexern (200) angeschlossen sind, welche Eingänge besitzen, die an PCM-Ausgangsanschlüsse der zweiten symmetrischen Zeitschaltmatrix angeschlossen sind.

## Claims

1. A concentrator-deconcentrator device, intended to be associated to a timeswitch telephone exchange central and to establish space-time throughways between PCM junctions, called subscriber junctions, which are connected to a group of subscriber and circuit equipments, and "exchanger central" PCM junctions which are connected to the exchange central, said device comprising as space-time switch elements symmetric time switch matrices (MTS), and being of the two stage type, characterized in that the device comprises a centralized part (102) which is composed of central modules (103 ... 108), common to the concentrator (2) and to the deconcentrator (3), and decentralized parts (101) belonging respectively one to the concentrator of the device and the other to the deconcentrator, these decentralized parts being included in terminal modules (4 ... 9) containing the subscriber and circuit equipments, that the common central modules (103 ... 108) each comprise symmetric time switch matrices (207, 215) which are branched between the PCM exchange central junctions (Se, Es) and the subscriber PCM junctions, and that the terminal modules each comprise symmetric time switch matrices (206, 217) which are branched between the subscriber PCM junctions and the subscriber and circuit equipments (202).

2. A concentrator-de-concentrator device according to claim 1, characterized in that each terminal module comprises a "first" symmetric time switch matrix (206) the inputs of which are connected by a first group of multiplexers (200) to the subscriber and circuit equipments (202) of the terminal module (4) via PCM junctions, and at least two outputs of which are connected to the inputs of the centralized part (102), and that each terminal module comprises a "second" symmetric time switch matrix (217) connected by at least two inputs to the outputs of the centralized part and by its outputs to the subscriber and circuit equipments (202) via PCM junctions.

3. A concentrator-deconcentrator device according to claim 1, characterized in that each central module comprises a "third" symmetric time switch matrix (207) connected by at least one input, called input of the centralized part, to an output of the first symmetric time switch matrix (206), and by its outputs to exchange central (Se) and local connection (c1) PCM junctions, and comprises a "fourth" symmetric time switch matrix (215), connected by its inputs to exchange central PCM junctions (Es) via a "second" group of multiplexers (212) and to local connection PCM junctions via another group of multiplexers (213), called third group of multiplexers, and connected by its outputs, called outputs of the centralized part, to the inputs of the second symmetric time switch matrices (217).

4. A concentrator-deconcentrator device according to claim 3, characterized in that the PCM junctions of the output local connection of the third symmetric time switch matrix are connected one by one to the local connection PCM junctions of the fourth symmetric time switch matrix.

5. A concentrator-deconcentrator device according to claims 2 or 3, characterized in that the outputs of the decentralized part of concentrator of each terminal module are individually connected each to an input of the centralized part via PCM junctions, and that the inputs of the decentralized part of deconcentrator of each terminal module are individually connected each to an output of the centralized part via further PCM junctions.

6. A concentrator-deconcentrator device according to claims 2 and 3, characterized in that each second symmetric time switch matrix comprises at least one tonality input (Tod) for tonalities destined to the subscriber equipments of the terminal module to which said matrix belongs, and that each third matrix comprises a tonality input (Toc) for tonalities destined to the exchange central to which the device is connected.

7. A concentrator-deconcentrator device according to claims 2 and 3, characterized in that each third symmetric time switch matrix comprises a signalisation input (Em) for signals destined to the exchange central to which the device is connected, and that each fourth symmetric time switch matrix comprises a signalisation output (Re) for signals coming from that exchange central.

8. A concentrator-deconcentrator device according to claims 2 and 3, characterized in that it comprises a device for testing the established throughways, this device comprising in each central module a symmetric time switch matrix (214), called third matrix, connected by two inputs to complementary logic levels and by its outputs to the address inputs of the second and third groups of multiplexers (212, 213) the inputs of which are connected to PCM test junctions (Te), and comprising in each terminal module a symmetric time switch matrix (205), called sixth symmetric time switch matrix, connected by two inputs to complementary logic levels and by its outputs to the address inputs of the first group of multiplexers (200) the inputs of which are connected to output PCM junctions of the second symmetric time switch matrix.

Fig.1

AUTOCOMMUTATEUR — 10

Se    Es

1

Ae4                    As4

2                      3

Ae5                                   As5

m    m

cl
q

Ae9                                   As9

CONCENTRATEUR—DÉCONCENTRATEUR

4
5
9

MODULES TERMINAUX

MICROPROCESSEURS — 13
14

0 018 865

Fig.2

Fig. 3

Fig.4

AUTOCOMMUTATEUR — 10

Se    Es

CARTE TERMINALE

MTS 206

MTS 207

MTS 215

MTS 217

MODULE TERMINAL

MODULE CENTRAL

0 018 865

Fig.5